(19) Europäisches Patentamt

European Patent Office

Office européen des brevets

(11) **EP 2 088 688 B1**

(12) **EUROPEAN PATENT SPECIFICATION**

(45) Date of publication and mention
of the grant of the patent:
**20.10.2010 Bulletin 2010/42**

(51) Int Cl.:
**H04B 7/01** *(2006.01)*

(21) Application number: **08002197.5**

(22) Date of filing: **06.02.2008**

(54) **Technique for performing a random access procedure in a mobile device**

Verfahren zur Durchführung eines Direktzugriffsverfahrens bei einer mobilen Vorrichtung

Technique pour effectuer une procédure d'accès aléatoire dans un dispositif mobile

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR** | (72) Inventor: **Lipka, Dietmar**<br>**92348 Berg (DE)** |
| (43) Date of publication of application:<br>**12.08.2009 Bulletin 2009/33** | (74) Representative: **Röthinger, Rainer**<br>**Wuesthoff & Wuesthoff**<br>**Patent- und Rechtsanwälte**<br>**Schweigerstrasse 2**<br>**81541 München (DE)** |
| (73) Proprietor: **Telefonaktiebolaget L M Ericsson (PUBL)**<br>**164 83 Stockholm (SE)** | (56) References cited:<br>**WO-A-2006/105297     US-A- 5 471 648** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 088 688 B1

## Description

## Technical Field

The invention relates to a technique for performing a random access procedure in a mobile device for accessing a mobile network. More specifically, the invention relates to a technique for performing a random access procedure in a moving mobile device.

## Background

Data transmissions between a mobile device (such as a mobile telephone or other mobile equipment such as a UMTS (Universal Mobile Telecommunications System) network card), on the one hand and a stationary radio base station of a mobile network (such as a Node-B in a UMTS system) on the other hand require synchronisation between these communication partners. In particular, the mobile device has to synchronize with the transmission scheme of a radio interface provided by the radio base station. Such synchronization may be performed in a straightforward manner in case of an established uplink connection, which allows that signals from the device are continuously analysed at the base station and that appropriate synchronization commands are signalled downlink. However, no such downlink signalling is possible in case the mobile device connects for the first time (for example at power-up or during a handover) or from a standby status (in which the device only listens to the downlink) to the base station. In these circumstances, a so-called random access procedure has to be performed to achieve synchronisation.

Specific transmission mechanisms including physical or logical random access channel are provided for the random access procedure. During the random access procedure, the mobile device transmits a specific access burst (as opposed to a normal transmission burst) on the random access channel. In case of a successful detection and analysis of the access burst, the base station responds by transmitting appropriate synchronisation parameters to the mobile device.

When transmitting the access burst, uplink transmission parameters at the mobile device such as time, frequency and power are in general not yet accurately aligned with the transmission scheme as supported by the radio base station. Therefore, additional resources have to be provided to allow for misalignments and avoid interference of the access bursts with normal bursts transmitted, for example, in neighbouring time slots. These additional resources comprise, for example, guard periods and guard bands in the time dimension and frequency dimension, respectively.

To detect an access attempt of a mobile device, a radio base station often uses a correlator including a digital filter which matches a signal received in the random access channel to a stored random access preamble. In case of a successful match, the correlator outputs a correlation peak. This peak must be distinguishable from disturbances like noise or interferences. The ability to differentiate a correlation peak from disturbances determines the coverage area of a radio base station within which a mobile device may successfully access the network.

Mobile devices compliant to the next generation mobile communication standards including the LTE (Long Term Evolution) standard will be required to communicate with the network at velocities of up to 500 kilometres per hour (km/h). This poses particular problems for random access attempts because of the resulting Doppler shift. An oscillator within the mobile device will synchronize to the Doppler shifted pilot signal transmitted from the base station. The uplink random access burst will again be Doppler-shifted when received at the radio base station, resulting in a frequency shift of twice the Doppler shift nominally resulting from the relative velocity between the mobile terminal and the base station.

For example, at 500 km/h the Doppler shift is about 1160 Hertz (Hz) assuming an LTE frequency of 2.5 Gigahertz (GHz). This will lead to a shift of more than 2 kilohertz (kHz) in the uplink random access signal when received at the radio base station, the evolved Node-B (eNB). In an LTE network, a random access preamble of 1 millisecond duration will be used, which is more than double the preamble sequence length in a GSM (Global System for Mobile communication) network. In this case, a 2 kHz shift in frequency corresponds to two additional oscillations, i.e. two additional rotations ($4\pi$) around the unit circle during the time length of the preamble sequence. The correlator of the eNB will thus not detect preamble sequences for relative velocities at or above about 250 km/h.

While in synchronized communication the eNB may account for compensating a Doppler shift, for example by changing the transmission frequency of transmission signals to the mobile device accordingly or by instructing the mobile device to change its transmission frequencies, no such compensation is possible for the random access procedure, in which the access burst reaches the base station for the first time and the base station has no possibility to command an adjustment of the incoming signal beforehand.

U.S. Patent No. 3,864,634 to Dragonetti describes an analog Doppler compensation circuit in the field of satellite communication. A positive Doppler shift is detected in a received signal by a dedicated phase-locked loop comprising a mixer and an oscillator. The detection signal is used to control an additional oscillator which generates a signal containing the negative Doppler information. This signal is used to modulate a transmission frequency.

European Patent No. 0 934 633 B1 describes a technique for determining and compensating for Doppler effects caused by a relative motion between transmitters and receivers in satellite-based communication systems. A user terminal receiver measures the amount of frequency offset relative to an expected nominal transmission carrier frequency for signals arriving at the user terminal. This offset is determined relative to a user terminal oscillator, scaled for the appropriate frequency band. A control processor is used to determine to what extent the received signals are offset from an expected reception frequency. Thereafter, a frequency precorrection factor is established and used for generating appropriate return communication signals.

WO 2006/105297 A2 describes a method for determining a frequency offset at a communication device having a receiver, a first estimating module and a second estimating module. The receiver receives a wireless carrier signal and the first estimating module estimates a frequency offset for the carrier signal. For estimating the frequency offset, the first estimating module comprises a first determining module which determines a cross product discriminator of the wireless carrier signal, and a second determining module which determines a dot product discriminator of the wireless carrier signal. Further, the second estimating module estimates a received carrier signal power to interference signal power ratio (C/I) using the frequency offset to compensate the Doppler shift between the receiver and a transmitter of the wireless carrier signal.

## Summary

There still is a demand for an efficient technique for performing a random access procedure by a moving mobile device.

This demand is satisfied by a method of performing, in a mobile device, a random access procedure for accessing a radio base station of a mobile network. The method comprises the steps of tuning a receiver of the mobile device to an expected frequency of a pilot signal provided by the radio base station; determining, based on an output signal of the receiver, a feedback signal for locking the receiver to a receive frequency of the pilot signal; providing the feedback signal to a transmitter of the mobile device; and adjusting, in the transmitter, a transmission frequency of a random access signal according to a frequency offset between the expected frequency and the receive frequency of the pilot signal indicated by the feedback signal.

The pilot signal may be a frequency synchronization burst having a predetermined structure, which is transmitted by the radio base station into the served cell. The receiver may, have an oscillator associated therewith, which is adjusted to the expected (i.e. predetermined) frequency of the synchronization burst. The output signal of the receiver may be provided to various other components of the mobile device and may additionally be fed to an Automatic Frequency Control ("AFC") unit, which may be a part of the receiver. As is known in the art, an AFC unit operates to provide a feedback signal to a reference frequency generator, such as an oscillator, in order to lock the frequency generator to an actual receive frequency of a received signal.

The feedback signal may thus be understood as indicating a frequency offset. In case the receiver has been tuned to the expected frequency of the pilot signal, the feedback may be interpreted as indicating the frequency offset between the expected frequency and the receive frequency, i.e. the frequency at which the pilot signal is actually received. Further, the frequency offset indicated by the feedback signal may be interpreted as being indicative of a Doppler shift resulting from a relative velocity between the mobile device and the radio base station. For this reason, the feedback signal may be provided to the transmitter and may be applied therein for pre-compensating a transmission frequency of the random access signal transmitted towards the base station. Due to the relative velocity, a Doppler shift may occur in this transmission frequency as received at the base station, which may be accounted for by the pre-compensation based on the feedback signal. In one implementation, the transmission frequency may be adjusted by the inverted (or negative) of the frequency offset indicated by the feedback signal.

The AFC procedure may be implemented by digital signal processing. For example, an AFC component may comprise circuitry operating on a digital output of the receiver. The feedback signal may represent in digital form an estimated frequency error (frequency offset). Additionally, or alternatively, the adjustment of the transmission frequency of the random access signal may be performed by digital signal processing. For example, a correction circuitry may be provided operating on a digital representation of an access burst signal. After adjustment of the transmission frequency according to the feedback signal provided to the correction circuitry, the corrected digital signal may be fed to an Digital-to-Analog converting circuit for subsequent transmission via the radio interface to the radio base station.

The transmission frequency may be adjusted in the correction circuitry in accordance with

$$S_{comp}[n] = S[n] \cdot e^{-j2\pi n \frac{2\Delta f}{f_s}}$$

wherein S[n] is the discrete signal before adjustment, $S_{comp}[n]$ the discrete signal after adjustment, $\Delta f$ is the inverted frequency offset as indicated by the feedback signal and $f_s$ is the sample rate.

The receiver may comprise an oscillator for providing a reference signal having the expected frequency for mixing with the received pilot signal and down-converting the pilot signal from a radio frequency to the receive frequency having an intermediate or baseband frequency. The feedback signal may be a control signal for controlling locking of the oscillator to the receive frequency as output by an AFC unit. For example, the feedback signal may comprise a control voltage to accordingly control a Voltage Controlled Crystal Oscillator (VCXO):

In one variant, the method comprises the initial step of calibrating the oscillator. The calibration may be performed with an accuracy at least corresponding to a predetermined accuracy for compensating the Doppler shift. For example, in case the adjustment of the transmission frequency is performed with an accuracy corresponding to a relative velocity between mobile device and base station of 50 kilometres per hour (km/h), it may be seen as sufficient to calibrate the oscillator to an accuracy in the same range.

The feedback signal may indicate one of a plurality of predetermined adjacent frequency intervals. For example, the feedback signal may indicate a frequency offset according to a control signal for a frequency divider which converts a frequency signal from an oscillator into a clock signal for the system clock in the mobile device in fixed steps of predetermined step size. The step size may correspond, e.g., to 1 kHz, 300 Hz or 100 Hz. In this variant, the oscillator may be calibrated with an accuracy at least corresponding to a frequency range of at least one of the frequency intervals. Accordingly, the oscillator may be calibrated with an accuracy of the order of 1 kHz, 300 Hz or 100 Hz, respectively. As a concrete example, in case the step size is chosen to be 300 Hz, the maximum remaining Doppler shift in the access burst as received at the base station may be 150 Hz (half the step size). In case the oscillator is calibrated to an accuracy of half the step size, i.e. 150 Hz, the total "shift" at the base station may amount to one step size, i.e. 300 Hz.

Further, the above-mentioned demand is satisfied by a computer program product, which comprises program code portions for performing the steps of any one of the methods and method aspects described herein when the computer program product is executed on one or more computing devices such as a mobile device. The computer program product may be stored on a computer readable recording medium, such as a permanent or re-writeable memory within or associated with a computing device or on a removable CD-ROM, DVD or USB-stick. Additionally or alternatively, the computer program product may be provided for download to a computing device, for example via a data network such as the Internet or a communication line such as a telephone line or wireless link.

The above-mentioned demand is satisfied by a mobile device adapted to perform a random access procedure for accessing a radio base station of a mobile network. The mobile device comprises a first component adapted to tune a receiver of the mobile device to an expected frequency of a pilot signal provided by the radio base station; a second component adapted to provide, based on an output signal of the receiver, a feedback signal to the receiver to lock the receiver to a receive frequency of the pilot signal; a third component adapted to provide the feedback signal to a transmitter of the mobile device; and a fourth component adapted to adjust, in the transmitter, a transmission frequency of a random access signal according to a frequency offset between expected frequency and receive frequency of the pilot signal indicated by the feedback signal.

The second component may comprise an AFC unit adapted to perform an Automatic Frequency Control ("AFC") procedure. The first component may comprise an oscillator which is associated with the receiver. In a variant of this implementation, the first component may comprise a fractional divider for providing a system clock to the mobile device and to which the feedback signal for locking the receiver to the receive frequency of the pilot signal is fed.

The mobile device may further comprise a calibration unit adapted to calibrate the oscillator with an accuracy at least corresponding to a predetermined accuracy for compensating a Doppler shift resulting from a relative velocity between the mobile device and a radio base station.

At least one of the second component and the fourth component of the mobile device may be adapted to operate based on digital signal processing.

## Brief Description of the Drawings

In the following, the invention will further be described with reference to exemplary embodiments illustrated in the figures, in which:

Fig. 1    schematically illustrates functional components of an embodiment of a mobile device;

Fig. 2    is a flow diagram illustrating an operation of the mobile device of Fig. 1 for performing a random access procedure;

Fig. 3    schematically illustrates a sequence of feedback signals which may be used for pre-compensating a Doppler shift.

## Detailed Description of Preferred Embodiments

In the following description, for purposes of explanation and not limitation, specific details are set forth, such as a mobile device with specific functional components for performing a random access procedure, in order to provide a thorough understanding of the current invention. The technique proposed herein may also be used for purposes other than performing a random access procedure. For example, any transmission signal (including any signalling) and any user data signal from a mobile device may be pre-compensated for a Doppler shift at a receiving base station. Apart from a pilot signal, any other signal with known frequency from the serving base station or similar stationary equipment of the access network may be used, which is suitable to lock a receiver of the mobile device to.

Those skilled in the art will further appreciate that functions explained hereinbelow may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the current invention is described as a method, it may also be embodied in a computer processor and a memory coupled to a processor, wherein the memory is encoded with one or more programs that perform the methods disclosed herein when executed by the processor.

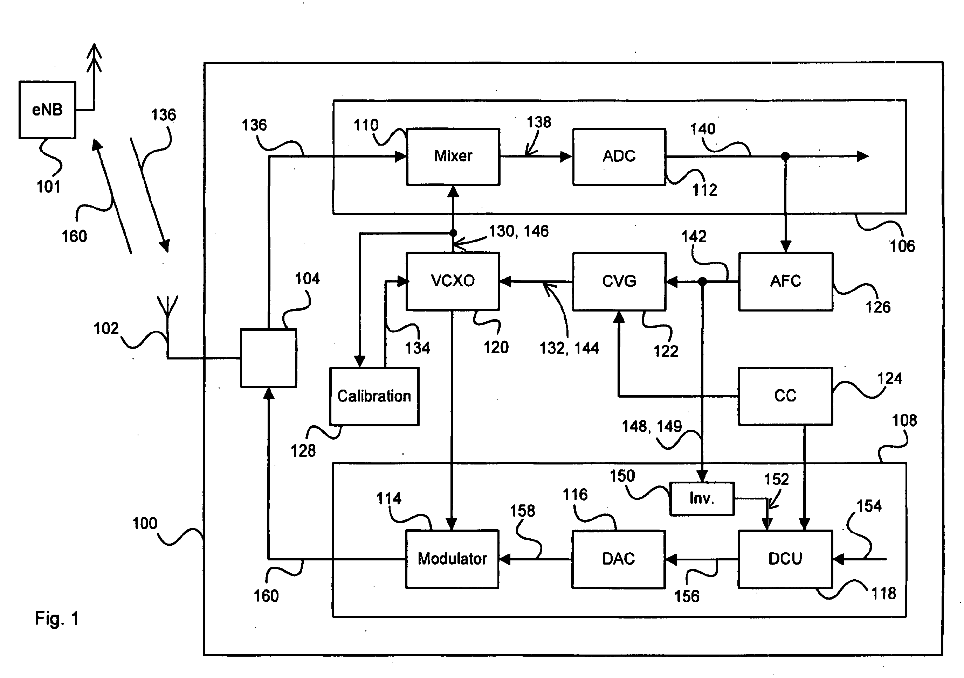

Fig. 1 schematically illustrates an embodiment of a mobile device 100 which is adapted to perform a random access procedure for accessing a radio base station 101 of a mobile network (not shown). It will exemplarily be assumed in the following that the base station 101 is an evolved Node-B (eNB) of an LTE network. The mobile device 100 comprises an antenna section 102 for receiving and transmitting radio signals, a coupling component 104 for coupling a received signal to further components of the device 100 or a signal to be transmitted to the antenna section 102, a receiving stage (Rx) 106 and transmitter stage (Tx) 108, which will in the following also be referred to as receiver 106 and transmitter 108, respectively.

The receiving stage 106 comprises an analog mixer 110 and an Analog-to-Digital Converter (ADC) 112. The transmitter stage 108 comprises an analog modulator 114, a Digital-to-Analog Converter (DAC) 116, as well as a Doppler Correction Unit (DCU) 118. Further, the mobile device 100 comprises a single Voltage Controlled Crystal Oscillator (VCXO) 120, a control voltage generator 122, a control component 124, an Automatic Frequency Correction (AFC) unit 126 and a calibration unit 128. The VCXO 120 may be connected to various components of the device 100 and therefore is not a part of the receiving stage 106. For example, as indicated in Fig. 1 the VCXO 120 provides a reference frequency not only to the mixer 110 of the receiving stage 106, but also to the modulator 114 of the transmitting stage 108.

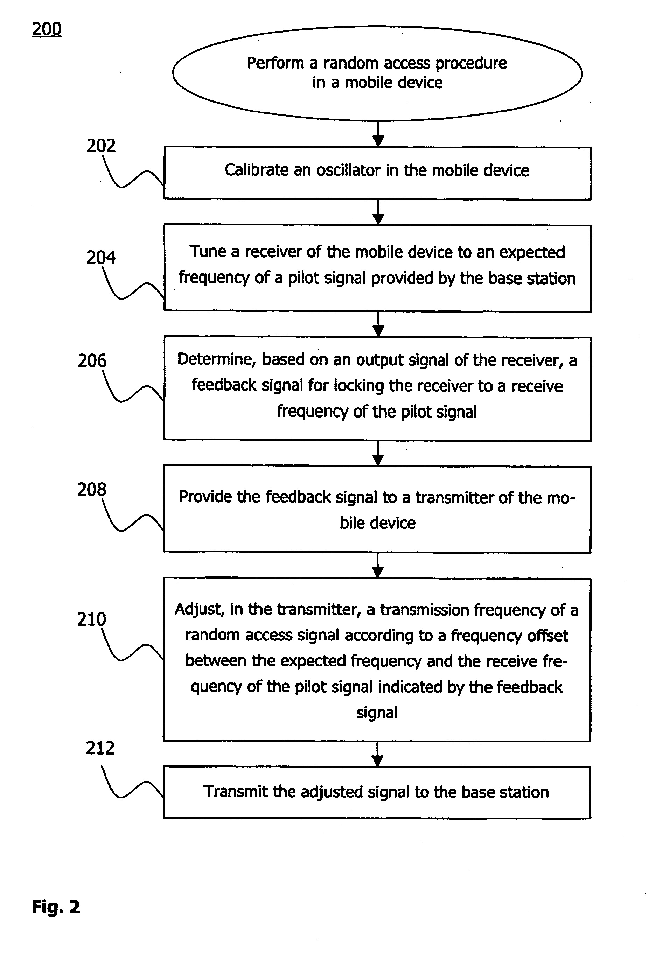

Fig. 2 illustrates a sequence of steps 200 which may be performed when the mobile device 100 of Fig. 1 operates in order to perform a random access procedure. It is assumed that the mobile device moves with a high velocity, e.g. several hundred kilometres per hour, relative to the eNB 101. As discussed above, a frequency shift of an access burst received from the device 100 at the eNB 101 may comprise twice the Doppler shift resulting from the relative movement, such that the access burst may not successfully be detected in the eNB 101. The sequence 200 aims to pre-compensate the Doppler shift in an access burst transmitted to the eNB 101 such that the access burst may successfully be detected.

In step 202, the VCXO 120 is calibrated with an accuracy at least corresponding to a predetermined accuracy for compensating the Doppler shift. This will be described in more detail further below. In order to perform the calibration, the calibration unit 128 may, for example, monitor signals such as signal 130 output by the VCXO 120 to the mixer 110 and/or other output signals of the VCXO 120 (not shown). The calibration unit 128 may determine that a (re-)calibration of the oscillator 120 is required based on the detected signals and/or further information related to the crystal oscillator 120, e.g., temperature information, aging information of the crystal, and a control voltage 132 applied to the oscillator 120. The calibration unit 128 may access correction tables (not illustrated in Fig. 1) or may use any other mechanism for determining a calibration signal 134. The calibration step 202 may be performed immediately before the subsequent steps of sequence 200 and/or may be performed on a regular basis, i.e. independent of whether a random access procedure is performed or not. For example, a calibration step such as step 202 may be performed at least at each power-up of the mobile device 100.

At step 204, the receiving stage 106 of device 100 is tuned to an expected frequency of a pilot signal 136 provided by the eNB 101. The pilot signal 136 may be a synchronisation signal, which is provided by the eNB 101 into the served cell to all mobile devices in order to enable a rough frequency synchronisation of the devices to the radio interface as provided by the eNB 101. In order to receive the pilot signal 136, the VCXO 120 is controlled by a control voltage 132 generated in the control voltage generator 122 to output a reference signal 130 having an expected frequency $f\_e$ of the pilot signal 136. The control component 124 may control the generator 122 to generate the appropriate control voltage 132 (not indicated in Fig. 1).

The reference signal 130 with frequency $f\_e$ is fed to the mixer 110. The received pilot signal 136 is mixed with the reference signal 130 in the mixer 110 and the resulting analog signal 138, which may be an intermediate frequency or baseband signal, is provided to the ADC 112. The ADC 112 outputs a signal 140 as a digital representation of the analog signal 138 to further components of the mobile device 100.

The digital signal 140 is also provided to the AFC unit 126, which operates to generate an error signal 142 indicative of a frequency offset or frequency error in the reference signal 130 having frequency $f\_e$ with respect to an actual receive frequency $f\_r$ of the pilot signal 136. The error signal 142 thus indicates a frequency offset of the oscillator signal 130 with respect to the pilot signal 136 as actually received. Various AFC procedures may be used to determine the error signal 142 by digital signal processing. For example, a frequency offset may be determined by estimating an average phase rotation of the pilot signal in time, e.g. based on successive symbols in the pilot signal 136. In typical cases, the receive frequency $f\_r$ as implicitly determined by the AFC unit 126 is a mean receive frequency from a range of multiple signals with slightly different frequencies resulting from multipath propagation.

The error signal 142 may be a digital control signal such as, for example, a control word. The error signal 142 may be a "Δf " signal indicating a frequency offset Δf = f_e - f_r. The error signal 142 is also referred to as a "feedback signal" 142 because the error signal is used to correct the frequency of the reference signal 130 provided to mixer 110 (and other components of the device 100, e.g. the modulator 114 in transmitter 108) and to thereby lock, in step 206, the receiver 106 to the actual (mean) receive frequency f_r of the pilot signal 136. For this purpose, the feedback signal 142 is provided to the control voltage generator 122, which converts the feedback signal 142 into a corresponding control voltage 144. In response to the adjusted control voltage 144, the oscillator 120 provides an accordingly adjusted reference signal 146 to the mixer 110, i.e. the reference signal 146 is adjusted in frequency.

The frequency offset Δf = f_e - f_r may be interpreted as being due to a Doppler shift in the pilot signal 136, i.e. a non-vanishing relative velocity between eNB 101 and mobile device 100. For this interpretation, other reasons for a frequency offset should be ruled out. In particular, the oscillator 120 should be properly calibrated, which is why a calibration step such as the step 202 described above may be useful.

Based on the interpretation of the frequency offset Δf indicated by the feedback signal 142 as a Doppler shift, the signal 142 may be coupled to various components of the mobile device 100 instead of only to the receiving stage 106, i.e. the oscillator 120 in the embodiment of Fig. 1. For example, in step 208 the feedback signal 142 is also coupled as a signal 148 via a connection 149 to the transmitting stage 108. The connection 149 may, e.g., be a hardwired or software-based connection. The signal 148 is received by an inverter 150, cf. Fig. 1. The feedback signal 148 indicates the above-discussed frequency offset Δf and the inverter 150 operates to output a frequency offset indication Δf_i = -2*Δf, i.e. the inverter 150 doubles the frequency offset Δf and inverts a sign thereof. The output signal 152 of the inverter 150 is provided to the DCU 118.

The DCU 118 receives a digital transmission signal 154 from other parts of the transmitting stage 108 and/or the mobile device 100. In the example illustrated here, the signal 154 is a representation of a random access burst to be transmitted to the eNB 101 (but, as mentioned above, it could also be any other signal). In step 210, the DCU 118 operates to adjust (correct) a frequency of the access burst represented by signal 154 according to the frequency offset Δf_i indicated by signal 152. In other words, the frequency of the access burst is shifted by twice the inverted of the frequency offset which is "observed" for the pilot signal 136 in the mobile device 100. In this way, a Doppler shift in the frequency of the access burst occurring at the eNB 101 is automatically pre-compensated in the mobile device 100 by inverting the observed frequency offset in the pilot signal 136 and applying the observed offset two times to the transmitted signal (the inverted frequency offset Δf has to be applied two times, as the modulator 114 receives its reference frequency from the VCXO 120, however, the reference frequency reflects the Doppler-shift in the receive frequency of pilot signal 136).

In principle, the DCU 118 may pre-compensate for the Doppler shift at the eNB 101 by complex multiplying the transmission signal (access burst) in the time domain with a complex oscillation

$$S_{comp}(t) = S(t) \cdot e^{-j2\pi 2\Delta ft}$$

wherein S(t) is the analog transmission signal, $S_{comp}$(t) is the Doppler-compensated analog signal, and Δf is the "observed" frequency offset. For the digital signal before the conversion into an analogue signal this reads

$$S_{comp}[n] = S[n] \cdot e^{-j2\pi n \frac{2\Delta f}{f_s}}$$

wherein S[n] is the discrete signal before adjustment, $S_{comp}$[n] the compensated discrete signal after adjustment, Δf is the frequency offset and $f_s$ is the sample rate.

The operation of the DCU 118 may be controlled by the control component 124. For example, the DCU 118 may be controlled to only operate on access bursts, but may also be controlled to adjust a transmission frequency for other transmission signals as well.

The output signal 156 of the DCU 118 is provided to the DAC component 116, which converts the digital signal 156 into an analog signal 158 and provides signal 158 to the analog modulator 114, in which the analog signal 158 is converted into a radio frequency (RF) signal 160, based on the reference frequency as provided by the VCXO 120. The reference frequency from the VCXO 120 reflects the Doppler-shift in the receive signal 136. However, this Doppler shift has already been compensated for in the DCU 118; moreover, the Doppler shift which will occur in the eNB 101 has also been pre-compensated for in the DCU 118 (remember that twice the observed Doppler shift Δf is applied in the DCU 118). In step 212, the RF signal 160 is then transmitted via antenna 102 towards the eNB 101.

As said before, interpreting a frequency offset between a received and an expected frequency as a Doppler shift may require that other sources of frequency errors, which may also result in a considerable frequency offset, are avoided or corrected before applying an output signal to a feedback determination component such as the AFC unit 126 in Fig. 1. In this respect it has to be noted that an accuracy of a calibration of the oscillator, which is used to provide the reference signal with the expected frequency in the mobile device, may be limited to a degree as required for the accuracy with which the transmitted access burst is corrected in order to be successfully perceivable at the radio base station.

For example, in order that a correlator in the base station successfully detects a received preamble sequence, one may want to have at most half a rotation about the unit circle ($\pi$) during the time length of the preamble sequence, e.g. 1 millisecond in the case of an LTE network, which corresponds to a tolerable frequency shift of at most 500 Hz. Therefore a 25 MHz oscillator in the mobile device only needs to be calibrated with an accuracy of about 20 ppm.

Likewise, also the frequency offset $\Delta f$ (more precisely, $\Delta f$-i as defined above) as indicated by the feedback signal and used for Doppler-correcting a transmission signal such as an access burst needs not to be more accurate than is required for a successful detection of the corrected transmission signal in the base station. This will be described also in the following.

While it has been described with the embodiment of Fig. 1 that the oscillator 120 is adjusted (or regulated) by the feedback signal 142, there are also other possibilities to lock a receiver to a receive frequency of a received signal which may be used for pre-compensating a Doppler shift in a transmission signal in a similar way. As one example, consider a configuration in which a system clock is not directly provided by an oscillator in a mobile device, but is derived from an oscillator signal by using a fractional divider. In this configuration, the oscillator itself may be unregulated, i.e. a feedback signal indicative of an offset between an expected and a received frequency would possibly not be provided to the oscillator, but would be provided to the frictional divider. In such an embodiment, the control signal for adjusting the fractional divider may be used as an indication for a Doppler shift. The accuracy of the indicated frequency offset will naturally be limited to the stepsize of the fractional divider.

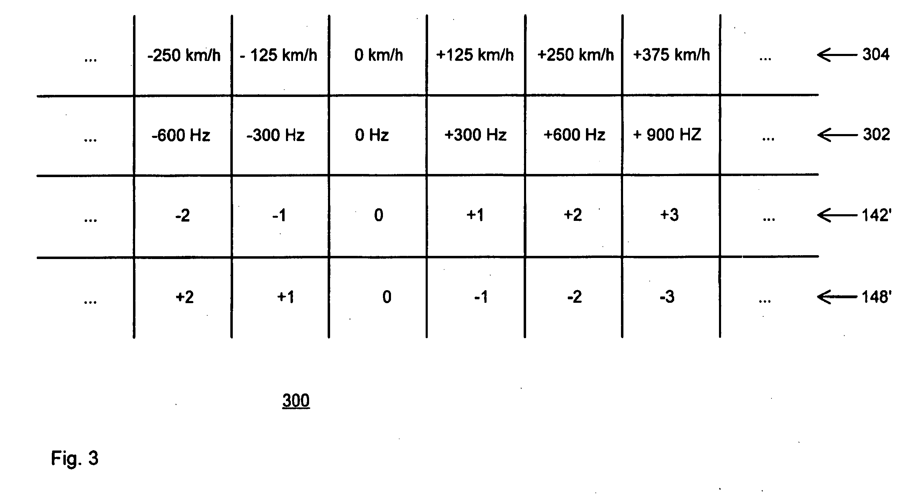

As an example, Fig. 3 shows in a table 300 a sequence of feedback signals 142'. It is assumed that these feedback signals 148' have been derived, in a similar manner as the feedback signal 142 in Fig. 1, by a feedback unit such as the AFC unit 126 in Fig. 1, but are intended to be fed to a fractional divider to correct a frequency offset (while a control signal to a fractional divider may generally be provided in binary form, e.g. as a 4-bit control word, the signals 142' are given in decimal notation in Fig. 3 for the sake of illustration). It is assumed that the fractional divider has a step size of 300 Hz. Accordingly, each of the control signals 142' may indicate one of adjacent frequency intervals as illustrated in row 302 in table 300. The frequency values given in row 302 may indicate a center frequency of the respective interval. For example, in case a frequency offset between a receive frequency and an expected frequency has been determined to lie within the range of +150 Hz and +450 Hz, this leads to a feedback signal 142' of "+1" in the embodiment illustrated in Fig. 3.

In a similar manner as has been described for the embodiment of Figs. 1 and 2 with signals 142 and 148, a feedback signal 148' may be derived by inverting the signal 142'. Taking the above example further, from a signal 142' of "+1", a signal 148' of "-1" would be derived. This signal 148' may then be provided to a transmitting stage of a mobile device to correct a transmission frequency of a transmission signal, e.g. a random access burst, in a similar way as described with reference to Figs. 1 and 2.

In row 304 of table 300, velocity values are indicated as resulting from an interpretation of the frequency values in row 302 as Doppler shifts. For example, interpreting a frequency offset of 300 Hz as a Doppler shift, this would indicate that the mobile device moves at a velocity of 125 km/h relative to the base station. It should be remembered, however, that the resulting frequency shift of an access burst transmitted to the radio base station would amount to twice the "measured" value in row 302, i.e. 600 Hz in the above example, because the receiving stage of the mobile device locks to an already shifted receive frequency.

As said already, feedback signals such as the signals 148 and 148', when interpreted as indicating a Doppler shift, may be used not only for pre-compensating a transmission frequency of a random access signal accordingly, but may also be used for other purposes. For example, the feedback signal may be used to Doppler-correct any other transmission of the mobile device in a similar way, e.g. during an ongoing communication with a radio base station. Additionally or alternatively, the Doppler shift "measured" by the feedback signal may be indicated to the base station, which then may accordingly frequency-correct its transmissions towards the mobile device. The Doppler shift may also be used for other applications internal or external of the mobile device. For example, the Doppler shift may be used to derive therefrom an indication of whether the mobile device moves or not. Such an indication may be provided to application layer programs in the device such as a localization application in order to, e.g., adjust a localization update interval, or may be provided to network based localization applications or other, location and/or velocity related applications.

While in the above embodiments it has been described that an indication of a frequency offset is derived based on a discrete, or digital, representation of a receive signal, a frequency offset determination component such as an AFC unit may also operate on an analog receive signal and a digital or analog Doppler correction signal may be derived therefrom. An analog representation of a Doppler correction may also be derived from the control voltage 144 in the embodiment shown in Fig. 1.

The techniques proposed herein enable that a random access procedure may be successfully performed even for a fast moving mobile device, i.e. may be successfully performed independent of a velocity of the mobile device. A pre-compensation for a Doppler shift occurring at a radio base station is performed in an efficient way without complicated extra components such as an additional reference oscillator in the mobile device or communications with the radio base station (which is not possible before the random access). Also, no extra transmission resources over the radio interface are required. Thus, the technique may be implemented in any mobile device with low extra effort. This improves the coverage of the random access served by the radio base station.

Furthermore, interpreting a frequency error signal or feedback signal in a receiving stage of the mobile device as indicating a Doppler shift allows using the feedback signal for other purposes in the mobile device besides compensating an access burst. An indication of the Doppler shift may even be signalled to the network.

While the current invention has been described in relation to its preferred embodiments, it is to be understood that this description is for illustrative purposes only. Accordingly, it is intended that the invention be limited only by the scope of the claims appended hereto.

**Claims**

1. A method of performing in a mobile device a random access procedure for accessing a radio base station of a mobile network, the method comprising the following steps:

   - tuning (204) a receiver (106) of the mobile device (100) to an expected frequency of a pilot signal (136) provided by the radio base station (101);
   - determining (206), based on an output signal (140) of the receiver (106), a feedback signal (142, 144) for locking the receiver (106) to a receive frequency of the pilot signal (136);
   - providing (208) the feedback signal (148) to a transmitter (108) of the mobile device (100); and
   - adjusting (210), in the transmitter (108), a transmission frequency of a random access signal (154) according to a frequency offset between the expected frequency and the receive frequency of the pilot signal (136) indicated by the feedback signal (148).

2. The method according to claim 1, wherein the feedback signal (148) is applied in the transmitter (108) according to an interpretation of the frequency offset indicated by the feedback signal as a Doppler shift resulting from a relative velocity between mobile device (100) and radio base station (101).

3. The method according to claim 1 or 2, wherein the feedback signal is derived from an Automatic Frequency Control ("AFC") procedure.

4. The method according to any one of the preceding claims, wherein at least one of the AFC procedure and the adjustment of the transmission frequency of the random access signal is implemented by digital signal processing.

5. The method according to any one of the preceding claims, wherein an oscillator (120) is associated with the receiver (106) and the feedback signal (142, 144) is a control signal for controlling locking of the oscillator (120) to the receive frequency.

6. The method according to claim 5, comprising the initial step of calibrating the oscillator (120) with an accuracy at least corresponding to a predetermined accuracy for compensating the Doppler shift.

7. The method according to any one of the preceding claims, wherein the feedback signal (142') indicates one of a plurality of predetermined adjacent frequency intervals.

8. The method according to claims 6 and 7, wherein the oscillator is calibrated with an accuracy at least corresponding to a frequency range of at least one of the frequency intervals.

9. The method according to any one of the preceding claims, wherein the feedback signal (144) comprises a control voltage.

10. The method according to any one of the preceding claims, wherein the transmission frequency is adjusted by the inverted frequency offset indicated by the feedback signal (142).

11. The method according to claim 10, wherein the transmission frequency is adjusted by

$$S_{comp}[n] = S[n] \cdot e^{-j2\pi n \frac{2\Delta f}{f_s}}$$

wherein S[n] is the discrete signal before adjustment, $S_{comp}[n]$ the discrete signal after adjustment, $\Delta f$ is the inverted frequency offset and $f_s$ is the sample rate.

12. A computer program product comprising program code portions for performing the steps of any one of the preceding claims when the computer program product is executed on one or more mobile devices.

13. The computer program product of claim 12, stored on a computer readable recording medium.

14. A mobile device adapted to perform a random access procedure for accessing a radio base station of a mobile network, comprising:

- a first component (120, 122, 124) adapted to tune a receiver (106) of the mobile device (100) to an expected frequency of a pilot signal (136) provided by the radio base station (101);
- a second component (126, 122) adapted to determine, based on an output signal (140) of the receiver (106), a feedback signal (142, 144) for locking the receiver (106) to a receive frequency of the pilot signal (136);
- a third component (149, 124) adapted to provide the feedback signal (148) to a transmitter (108) of the mobile device (100); and
- a fourth component (118) adapted to adjust, in the transmitter (108), a transmission frequency of a random access signal (154) according to a frequency offset between expected frequency and receive frequency of the pilot signal (136) indicated by the feedback signal (148).

15. The mobile device according to claim 14, wherein the second component comprises an AFC unit (126) adapted to perform an Automatic Frequency Control ("AFC") procedure.

16. The mobile device according to claim 14 or 15, wherein the first component comprises an oscillator (120) which is associated with the receiver (106).

17. The mobile device according to claim 16, wherein the first component comprises a fractional divider for providing a system clock to the mobile device and wherein the feedback signal for locking the receiver to the receive frequency of the pilot signal is fed to the fractional divider.

18. The mobile device according to any one of claims 14 to 17, wherein the mobile device further comprises a calibration unit (128) adapted to calibrate the oscillator (102) with an accuracy at least corresponding to a predetermined accuracy for compensating a Doppler shift resulting from a relative velocity between the mobile device (100) and a radio base station (101).

19. The mobile device according to any one of claims 14 to 18, wherein at least one of the second component (126) and the fourth component (118) of the mobile device are adapted to operate based on digital signal processing.

**Patentansprüche**

1. Verfahren zur Durchführung einer Zufallszugriffsprozedur in einer mobilen Vorrichtung zum Zugreifen auf eine Funkbasisstation eines Mobilfunknetzes, wobei das Verfahren die folgenden Schritte umfasst:

- Einstellen (204) eines Empfängers (106) der mobilen Vorrichtung (100) auf eine erwartete Frequenz eines durch die Funkbasisstation (101) bereitgestellten Pilotsignals (136);
- Bestimmen (206) eines Rückführungssignals (142, 144) basierend auf einem Ausgangssignal (140) des Empfängers (106), um den Empfänger (106) an eine Empfangsfrequenz des Pilotsignals (136) zu koppeln;
- Bereitstellen (208) des Rückführungssignals (148) an einen Sender (108) der mobilen Vorrichtung (100); und
- Anpassen (210) einer Sendefrequenz eines Zufallszugriffssignals (154) in dem Sender (108) entsprechend einer durch das Rückführungssignal (148) angegebenen Frequenzverschiebung zwischen der erwarteten Frequenz und der Empfangsfrequenz des Pilotsignals (136).

2. Verfahren nach Anspruch 1, wobei das Rückführungssignal (148) in dem Sender (108) entsprechend einer Interpretation der durch das Rückführungssignal angegebenen Frequenzverschiebung als Dopplerverschiebung angewandt wird, die aus einer Relativgeschwindigkeit zwischen der mobilen Vorrichtung (100) und der Funkbasisstation (101) resultiert.

3. Verfahren nach Anspruch 1 oder 2, wobei das Rückführungssignal aus einer automatischen Frequenzregelungsprozedur ("AFC") hergeleitet wird.

4. Verfahren nach einem der vorhergehenden Ansprüche, wobei die AFC-Prozedur und/oder das Anpassen der Sendefrequenz des Zufallszugriffssignals durch digitale Signalverarbeitung ausgeführt wird.

5. Verfahren nach einem der vorhergehenden Ansprüche, wobei ein Oszillator (120) dem Empfänger (106) zugeordnet ist und das Rückführungssignal (142, 144) ein Regelsignal zum Regeln des Koppelns des Oszillators (120) an die Empfangsfrequenz ist.

6. Verfahren nach Anspruch 5,

umfassend als ersten Schritt eine Kalibrierung des Oszillators (120) mit einer Genauigkeit, die zumindest einer vorbestimmten Genauigkeit zur Kompensierung der Dopplerverschiebung entspricht.

**7.** Verfahren nach einem der vorhergehenden Ansprüche,
wobei das Rückführungssignal (142') eines von mehreren vorbestimmten benachbarten Frequenzintervallen angibt.

**8.** Verfahren nach Anspruch 6 und 7,
wobei der Oszillator mit einer Genauigkeit kalibriert wird, die zumindest einem Frequenzbereich von zumindest einem der Frequenzintervalle entspricht.

**9.** Verfahren nach einem der vorhergehenden Ansprüche,
wobei das Rückführungssignal (144) eine Regelspannung aufweist.

**10.** Verfahren nach einem der vorhergehenden Ansprüche,
wobei die Sendefrequenz durch die umgekehrte Frequenzverschiebung angepasst wird, die durch das Rückführungssignal (142) angegeben wird.

**11.** Verfahren nach Anspruch 10,
wobei die Sendefrequenz durch

$$S_{comp}\left[n\right] = S\left[n\right] \cdot e^{-j2\pi n \frac{2\Delta f}{f_s}}$$

angepasst wird, wobei S[n] das diskrete Signal vor der Anpassung ist, $S_{comp}$[n] das diskrete Signal nach der Anpassung ist, $\Delta f$ die umgekehrte Frequenzverschiebung ist und $f_s$ die Abtastrate ist.

**12.** Computerprogrammprodukt mit Programmcodeabschnitten zum Durchführen der Schritte nach einem der vorhergehenden Ansprüche, wenn das Computerprogrammprodukt auf einer oder mehreren mobilen Vorrichtungen ausgeführt wird.

**13.** Computerprogrammprodukt nach Anspruch 12, das auf einem computerlesbaren Aufnahmemedium gespeichert ist.

**14.** Mobile Vorrichtung, die dazu ausgebildet ist, eine Zufallszugriffsprozedur zum Zugreifen auf eine Funkbasisstation eines Mobilfunknetzes durchzuführen, umfassend:

- eine erste Komponente (120, 122, 124), die dazu ausgebildet ist, einen Empfänger (106) der mobilen Vorrichtung (100) auf eine erwartete Frequenz eines durch die Funkbasisstation (101) bereitgestellten Pilotsignals (136) einzustellen;
- eine zweite Komponente (126, 122), die dazu ausgebildet ist, basierend auf einem Ausgangssignal (140) des Empfängers (106) ein Rückführungssignal (142, 144) zum Koppeln des Empfängers (106) an eine Empfangsfrequenz des Pilotsignals (136) zu bestimmen;
- eine dritte Komponente (149, 124), die dazu ausgebildet ist, das Rückführungssignal (148) an einen Sender (108) der mobilen Vorrichtung (100) bereitzustellen; und
- eine vierte Komponente (118), die dazu ausgebildet ist, in dem Sender (108) eine Sendefrequenz eines Zufallszugriffsignals (154) entsprechend einer durch das Rückführungssignal (148) angegebenen Frequenzverschiebung zwischen der erwarteten Frequenz und der Empfangsfrequenz des Pilotsignals (136) anzupassen.

**15.** Mobile Vorrichtung nach Anspruch 14,
wobei die zweite Komponente eine AFC-Einheit (126) aufweist, die dazu ausgebildet ist, eine automatische Frequenzregelungsprozedur ("AFC") durchzuführen.

**16.** Mobile Vorrichtung nach Anspruch 14 oder 15,
wobei die erste Komponente einen Oszillator (120) aufweist, der dem Empfänger (106) zugeordnet ist.

**17.** Mobile Vorrichtung nach Anspruch 16,
wobei die erste Komponente einen Bruchteiler zum Bereitstellen eines Systemtakts in der mobilen Vorrichtung aufweist, und wobei das Rückführungssignal zum Koppeln des Empfängers an die Empfangsfrequenz des Pilotsignals dem Bruchteiler zugeführt wird.

**18.** Mobile Vorrichtung nach einem der Ansprüche 14 bis 17,
wobei die mobile Vorrichtung ferner eine Kalibriereinheit (128) aufweist, die dazu ausgebildet ist, den Oszillator (102) mit einer Genauigkeit zu kalibrieren, die zumindest einer vorbestimmten Genauigkeit zur Kompensierung einer Dopplerverschiebung entspricht, die aus einer Relativgeschwindigkeit zwischen der mobilen Vorrichtung (100) und der Funkbasisstation (101) resultiert.

**19.** Mobile Vorrichtung nach einem der Ansprüche 14 bis 18,
wobei die zweite Komponente (126) und/oder die vierte Komponente (118) der mobilen Vorrichtung dazu ausgebildet ist, basierend auf digitaler Signalverarbeitung betrieben zu werden.

**Revendications**

1. Procédé consistant à réaliser dans un dispositif mobile une procédure d'accès aléatoire destinée à accéder à une station de base radio d'un réseau mobile, le procédé comprenant les étapes suivantes :

   - régler (204) un récepteur (106) du dispositif mobile (100) à une fréquence attendue d'un signal pilote (136) délivré par la station de base radio (101) ;
   - déterminer (206), sur la base d'un signal de sortie (140) du récepteur (106), un signal de rétroaction (142, 144) destiné à verrouiller le récepteur (106) à une fréquence de réception du signal pilote (136) ;
   - délivrer (208) le signal de rétroaction (148) vers un émetteur (108) du dispositif mobile (100) ; et
   - ajuster (210), dans l'émetteur (108), une fréquence de transmission d'un signal d'accès aléatoire (154) conformément à un décalage de fréquence entre la fréquence attendue et la fréquence de réception du signal pilote (136) indiqué par le signal de rétroaction (148).

2. Procédé selon la revendication 1, dans lequel le signal de rétroaction (148) est appliqué dans l'émetteur (108) conformément à une interprétation du décalage de fréquence indiqué par le signal de rétroaction en tant que décalage Doppler résultant d'une vitesse relative entre le dispositif mobile (100) et la station de base radio (101).

3. Procédé selon la revendication 1 ou 2, dans lequel le signal de rétroaction est dérivé d'une procédure de contrôle automatique de fréquence (AFC).

4. Procédé selon l'une quelconque des revendications précédentes, dans lequel au moins l'un parmi la procédure AFC et l'ajustement de la fréquence de transmission du signal d'accès aléatoire est mis en oeuvre par un traitement de signal numérique.

5. Procédé selon l'une quelconque des revendications précédentes, dans lequel un oscillateur (120) est associé au récepteur (106) et le signal de rétroaction (142, 144) est un signal de commande destiné à commander le verrouillage de l'oscillateur (120) à la fréquence de réception.

6. Procédé selon la revendication 5, comprenant l'étape initiale de calibrage de l'oscillateur (120) avec une précision correspondant au moins à une précision prédéterminée destinée à compenser le décalage Doppler.

7. Procédé selon l'une quelconque des revendications précédentes, dans lequel le signal de rétroaction (142') indique l'un parmi une pluralité d'intervalles de fréquences adjacentes prédéterminés.

8. Procédé selon les revendications 6 et 7, dans lequel l'oscillateur est calibré avec une précision correspondant au moins à une plage de fréquence d'au moins l'un des intervalles de fréquence.

9. Procédé selon l'une quelconque des revendications précédentes, dans lequel le signal de rétroaction (144) comprend une tension de commande.

10. Procédé selon l'une quelconque des revendications précédentes, dans lequel la fréquence de transmission est ajustée par le décalage de fréquence inversé indiqué par le signal de rétroaction (142).

11. Procédé selon la revendication 10, dans lequel la fréquence de transmission est ajustée par

$$S_{comp}\,[n] = S[n] \cdot e^{-j2\pi n \frac{2\Delta f}{f_s}}$$

dans laquelle S[n] correspond au signal discret avant ajustement, $S_{comp}$[n] correspond au signal discret après ajustement, $\Delta f$ correspond au décalage de fréquence inversé et $f_s$ correspond au taux d'échantillonnage.

12. Produit-programme informatique comprenant des parties de codes de programme destinées à réaliser les étapes selon l'une quelconque des revendications précédentes lorsque le produit-programme informatique est exécuté sur un ou plusieurs dispositifs mobiles.

13. Produit-programme informatique selon la revendication 12, mémorisé sur un support d'enregistrement lisible sur ordinateur.

14. Dispositif mobile adapté pour réaliser une procédure d'accès aléatoire destinée à accéder à une station de base radio d'un réseau mobile, comprenant :

   - un premier composant (120, 122, 124) adapté pour régler un récepteur (106) du dispositif mobile (100) à une fréquence attendue d'un signal pilote (136) délivré par la station de base radio (101) ;
   - un deuxième composant (126, 122) adapté pour déterminer, sur la base d'un signal de sortie (140) du récepteur (106), un signal de rétroaction (142, 144) destiné à verrouiller le récepteur (106) à une fréquence de réception du signal pilote (136) ;

- un troisième composant (149, 124) adapté pour délivrer le signal de rétroaction (148) vers un émetteur (108) du dispositif mobile (100) ; et

- un quatrième composant (118) adapté pour ajuster, dans l'émetteur (108), une fréquence de transmission d'un signal d'accès aléatoire (154) conformément à un décalage de fréquence entre la fréquence attendue et la fréquence de réception du signal pilote (136) indiqué par le signal de rétroaction (148).

15. Dispositif mobile selon la revendication 14, dans lequel le deuxième composant comprend une unité AFC (126) adaptée pour réaliser une procédure de contrôle automatique de fréquence (AFC).

16. Dispositif mobile selon la revendication 14 ou 15, dans lequel le premier composant comprend un oscillateur (120) qui est associé au récepteur (106).

17. Dispositif mobile selon la revendication 16, dans lequel le premier composant comprend un diviseur fractionnaire destiné à fournir une horloge système au dispositif mobile et dans lequel le signal de rétroaction destiné à verrouiller le récepteur à la fréquence de réception du signal pilote est délivré vers le diviseur fractionnaire.

18. Dispositif mobile selon l'une quelconque des revendications 14 à 17, dans lequel le dispositif mobile comprend en outre une unité de calibrage (128) adaptée pour calibrer l'oscillateur (120) avec une précision correspondant au moins à une précision prédéterminée destinée à compenser un décalage Doppler résultant d'une vitesse relative entre le dispositif mobile (100) et une station de base radio (101).

19. Dispositif mobile selon l'une quelconque des revendications 14 à 18, dans lequel au moins l'un parmi le deuxième composant (126) et le quatrième composant (118) du dispositif mobile est adapté pour fonctionner sur la base du traitement de signal numérique.

Fig. 1

200

```
           ┌─────────────────────────────────────────┐
           │      Perform a random access procedure   │
           │           in a mobile device             │
           └─────────────────────────────────────────┘
                              │
                              ▼
    202    ┌─────────────────────────────────────────────────┐
           │      Calibrate an oscillator in the mobile device │
           └─────────────────────────────────────────────────┘
                              │
                              ▼
    204    ┌─────────────────────────────────────────────────┐
           │   Tune a receiver of the mobile device to an expected │
           │  frequency of a pilot signal provided by the base station │
           └─────────────────────────────────────────────────┘
                              │
                              ▼
    206    ┌─────────────────────────────────────────────────┐
           │  Determine, based on an output signal of the receiver, a │
           │   feedback signal for locking the receiver to a receive │
           │            frequency of the pilot signal          │
           └─────────────────────────────────────────────────┘
                              │
                              ▼
    208    ┌─────────────────────────────────────────────────┐
           │  Provide the feedback signal to a transmitter of the mo- │
           │                    bile device                    │
           └─────────────────────────────────────────────────┘
                              │
                              ▼
    210    ┌─────────────────────────────────────────────────┐
           │   Adjust, in the transmitter, a transmission frequency of a │
           │    random access signal according to a frequency offset │
           │   between the expected frequency and the receive fre- │
           │   quency of the pilot signal indicated by the feedback │
           │                       signal                      │
           └─────────────────────────────────────────────────┘
                              │
    212                       ▼
           ┌─────────────────────────────────────────────────┐
           │   Transmit the adjusted signal to the base station │
           └─────────────────────────────────────────────────┘
```

**Fig. 2**

| ... | -250 km/h | - 125 km/h | 0 km/h | +125 km/h | +250 km/h | +375 km/h | ... | ← 304 |
|-----|-----------|------------|--------|-----------|-----------|-----------|-----|-------|
| ... | -600 Hz | -300 Hz | 0 Hz | +300 Hz | +600 Hz | + 900 HZ | ... | ← 302 |
| ... | -2 | -1 | 0 | +1 | +2 | +3 | ... | ← 142' |
| ... | +2 | +1 | 0 | -1 | -2 | -3 | ... | ← 148' |

<u>300</u>

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3864634 A, Dragonetti
- EP 0934633 B1
- WO 2006105297 A2